# EUROPÄISCHE PATENTSCHRIFT

(11) **EP 2 673 126 B1**
(45) Veröffentlichungstag und Bekanntmachung des Hinweises auf die Patenterteilung: **15.04.2015**
(21) Anmeldenummer: 12703706.7
(22) Anmeldetag: 08.02.2012
(51) Int. Cl.: B29C 45/14

(54) **FORMWERKZEUG ZUM HINTERSPRITZEN EINER KUNSTSTOFFFOLIE MIT EINER KUNSTSTOFFSCHMELZE**
MOLDING TOOL FOR BACK-MOLDING A PLASTIC FILM WITH A PLASTIC MELT
OUTIL DE FORMAGE DESTINÉ AU SURMOULAGE PAR INJECTION D'UNE FEUILLE DE PLASTIQUE À L'AIDE D'UNE MASSE FONDUE DE MATIÈRE PLASTIQUE

(30) Priorität: 10.02.2011 DE 102011010971
(43) Veröffentlichungstag der Anmeldung: 18.12.2013
(73) Patentinhaber: Leonhard Kurz Stiftung & Co. KG, 90763 Fürth (DE)
(72) Erfinder: BURGER, Harald, 90480 Nürnberg (DE)
(74) Vertreter: Louis Pöhlau Lohrentz
(86) Internationale Anmeldenummer: PCT/EP2012/000569
(87) Internationale Veröffentlichungsnummer: WO 2012/107222

(56) Entgegenhaltungen:
- EP-A1- 1 614 516
- JP-A- 2 059 307
- JP-A- 5 096 574
- JP-A- 11 005 230
- US-A1- 2005 257 998
- DATABASE WPI Week 199749 Thomson Scientific, London, GB; AN 1997-531432 XP002675194, -& JP 9 254185 A (MARUI KOGYO KK) 30. September 1997 (1997-09-30)

## Beschreibung

Die Erfindung betrifft ein Formwerkzeug zum Hinterspritzen einer Kunststofffolie mit einer Kunststoffschmelze. Das Formwerkzeug weist ein erstes Formwerkzeugteil und ein zweites Formwerkzeugteil auf. Ferner betrifft die Erfindung auch ein entsprechendes Verfahren zum Herstellen eines Kunststoffteils, sowie Kunststoffteile hergestellt mit dem erfindungsgemäßen Formwerkzeug beziehungsweise hergestellt mit dem erfindungsgemäßen Herstellungsverfahren.

Aus der US 2006/0188595 A1 ist ein Formwerkzeug zum Hinterspritzen einer Kunststofffolie mit einer Kunststoffschmelze und ein zugehöriges Herstellungsverfahren bekannt, wobei für die IM-Dekoration (IM= In-Mould) des Kunststoffformlings eine Kunststofffolie mit einer Dekorierschicht in dem ersten Formwerkzeugteil zur genauen Positionierung durch Ansaugen fixiert wird.

Die EP 1 614 516 A1 beschreibt ein Formwerkzeug zum Hinterspritzen einer Kunststofffolie mit einer Kunststoffschmelze mit konkav gewölbtem Dekorierflächenbereich, wobei zur Fixierung der Kunststofffolie ein Fixierrahmen vorgesehen ist.

Eine Vorrichtung mit einem ähnlichen Formwerkzeug beschreibt die XP002675194 / JP 9 254185 A. Das Formwerkzeug weist einen konvex gewölbten Dekorflächenbereich auf.

Der vorliegenden Erfindung liegt die Aufgabe zugrunde ein verbessertes Formwerkzeug bereitzustellen.

Die Aufgabe der Erfindung wird gelöst mit dem Formwerkzeug gemäß Patentanspruch 1 und mit dem Herstellungsverfahren gemäß Patentanspruch 12. Bevorzugte optionale Lösungen ergeben sich mit den Ausgestaltungen der auf die Patentansprüche 1 und 12 rückbezogenen Unteransprüche.

Das Formwerkzeug gemäß Patentanspruch 1 ist ein Formwerkzeug zum Hinterspritzen einer Kunststofffolie mit einer Kunststoffschmelze. Dieses Formwerkzeug umfasst ein erstes Formwerkzeugteil und ein zweites Formwerkzeugteil. Bei geschlossenem Formwerkzeug ist zwischen den beiden Formwerkzeugteilen die Kavität des Formwerkzeugs ausgebildet.

Das erste Formwerkzeugteil umfasst einen Dekorierflächenbereich und einen im Bereich des äußeren Randes des Dekorierflächenbereichs angeordneten Spannflächenbereich. Zusätzlich umfasst dieses erste Formwerkzeugteil einen Vertiefungsbereich, der innerhalb des Spannflächenbereichs und/oder in dem äußeren Rand des Spannflächenbereichs oder außen mit Abstand vom äußeren Rand des Spannflächenbereichs angeordnet ist. Das zweite Formwerkzeugteil umfasst eine Einlassöffnung für die Kunststoffschmelze und einen Vorsprungsbereich, der für den Eingriff in den Vertiefungsbereich des ersten Formwerkzeugteils vorgesehen ist. Die Einlassöffnung im zweiten Formwerkzeugteil ist vorzugsweise als Einlasskanal ausgebildet.

Zum Hinterspritzen der Kunststofffolie wird die Kunststofffolie zwischen den beiden Formwerkzeugteilen eingelegt, und zwar derart, dass sie durch Zusammenwirken des Spannflächenbereichs und des Vertiefungsbereichs des ersten Formwerkzeugteils mit dem Vorsprungsbereich des zweiten Formwerkzeugteils gespannt wird. Hierfür ist erfindungsgemäß vorgesehen, dass der Vorsprungsbereich des zweiten Formwerkzeugteils so angeordnet ist, dass er bei geschlossenem Werkzeug in den Vertiefungsbereich des ersten Formwerkzeugteils eingreift. Damit wird die zwischen dem ersten Formwerkzeugteil und dem zweiten Formwerkzeugteil mindestens auf dem Spannflächenbereich des ersten Formwerkzeugteils aufliegend angeordnete Kunststofffolie in den Vertiefungsbereich des ersten Formwerkzeugteils unter Spannen der Kunststofffolie mitgenommen und dort gehalten.

Wesentlich bei diesem erfindungsgemäßen Formwerkzeug ist, dass die in dem Formwerkzeug zum Hinterspritzen eingesetzte Kunststofffolie auf den Spannflächen aufliegend gespannt über der Dekorierfläche in dem Werkzeug gehalten wird, wenn die Kunststoffschmelze in die Kavität über die Einlassöffnung in das, vorzugsweise auf etwa 30°C bis 70°C vorgeheizte, Formwerkzeug eingelassen wird. Es wird damit eine faltenfreie Dekorierung des Kunststoffformlings im Bereich der Dekorierfläche erhalten, weil durch das flächige, glatte Aufliegen der Folie auf den Spannflächen und dem gleichzeitigen Spannen der Kunststofffolie auf der Dekorierfläche trotz des Aufweichens der thermoplastischen Kunststofffolie durch die heiße (vorzugsweise etwa 200°C bis 300°C) Kunststoffschmelze die Kunststofffolie während des Hinterspritzens faltenfrei bleiben kann. Wenn der Spannflächenbereich unmittelbar an den äußeren Rand des Dekorierflächenbereichs angrenzt, wird eine faltenfreie Dekorierung über den gesamten Dekorierflächenbereich bis unmittelbar an den äußeren Rand des Dekorierflächenbereichs heran ermöglicht.

Das Spannen der in dem Formwerkzeug eingesetzten Kunststofffolie wird sichergestellt, dadurch dass in dem ersten Formwerkzeugteil ein Vertiefungsbereich und in dem zweiten Formwerkzeugteil ein Vorsprungsbereich ausgebildet ist, die beim Schließen des Werkzeugs durch Zusammenführen der beiden Werkzeugteile automatisch in gegenseitigen Eingriff kommen, sodass die zwischengeschaltete, das heißt die zwischen Vertiefungsbereich und Vorsprungsbereich liegende, Kunststofffolie durch den Vorsprungsbereich in den Vertiefungsbereich mitgenommen wird, vorzugsweise in Art eines Ziehvorgangs. Der Vertiefungsbereich ist vorzugsweise unmittelbar in dem ersten Formwerkzeugteil als Vertiefungskanal oder anderweitig geformte Vertiefung ausgebildet. Der Vorsprungsbereich ist in dem zweiten Formwerkzeugteil ebenfalls vorzugsweise unmittelbar ausgebildet, vorzugsweise durch eine mit der Fläche des Formwerkzeugs einstückigen Erhebung. Der Vertiefungsbereich ist vorzugsweise als nutförmiger Kanal und der Vorsprungsbereich vorzugsweise als leistenförmige Erhebung ausgebildet. Der Vertiefungsbereich ist in dem ersten Formwerkzeugteil und der Vorsprungsbereich in dem zweiten Formwerkzeugteil vorzugsweise unmittelbar im Bereich des äußeren Randes des Spannflächenbereichs oder mit geringem Abstand vom äußeren Rand des Spannflächenbereichs angeordnet. Eine Anordnung unmittelbar innerhalb des Spannflächenbereichs ist jedoch ebenfalls möglich. Der Vertiefungsbereich des ersten Formwerkzeugteils und der Vorsprungsbereich des zweiten Formwerkzeugteils bilden eine ineinander greifende Eingreifeinrichtung, mit der die zwischengeschaltete Kunststofffolie durch Mitnahme gespannt wird.

Der Vorsprungsbereich kann auch aus einem oder mehreren vom Material des Formwerkzeugs unterschiedlichen Materialien ausgebildet sein. Dazu ist es vorteilhaft, wenn der Vorsprungsbereich als separates Teil in einem dem Vertiefungsbereich ähnlichen, nutförmigen Kanal eingelegt ist und darin kraftschlüssig und/oder formschlüssig gehalten ist. Der Vorsprungsbereich kann beispielsweise aus einem Metall wie z.B. Kupfer oder Messing bestehen oder aus Kunststoff oder Gummi. Der Vorsprungsbereich kann auch aus einem Kompositmaterial bestehen oder mehrere Schichten aufweisen, insbesondere eine Oberflächenbeschichtung aufweisen. Ein vergleichsweise weiches Material kann vorteilhaft sein, um die Kunststofffolie weniger stark mechanisch zu beanspruchen. Gummi oder ein mit Gummi oder Silikon oder ähnlichem Material beschichteter Vorsprungsbereich kann vorteilhaft sein, um eine besonders gute Griffigkeit gegenüber der Kunststofffolie zu erlangen und die oben beschriebene Mitnahme zu verbessern. Je nach Ausbildung der zu dem Vorsprungsbereich weisenden Oberfläche der Kunststofffolie kann es für bestimmte Anwendungsfälle, beispielsweise bei vergleichsweise rauer zu dem Vorsprungsbereich weisender Oberfläche der Kunststofffolie, vorteilhaft sein, wenn die Oberfläche des Vorsprungsbereichs besonders glatt und gleitfähig ist und beispielsweise eine Teflonbeschichtung aufweist.

Der Vorsprungsbereich und der damit zusammenwirkende Vertiefungsbereich können die Dekorierfläche vollständig umschließen oder mittels Unterbrechungen in Teilbereiche unterteilt sein. Es sind aber auch Einzelelemente möglich. Beispielsweise kann der Vorsprungsbereich in Form einer Nase oder eines Zapfens und der Vertiefungsbereich in Form einer entsprechend gegengeformten Ausnehmung, z.B. in Form eines Napfes ausgebildet sein. Dabei ist es vorteilhaft, wenn der Vorsprungsbereich und der Vertiefungsbereich einen kontinuierlichen Radius oder Radien aufweisen, um ein während des Schließens der Form gleichmäßiges Spannen der Kunststofffolie zu erreichen, wobei die Kunststofffolie gleichmäßig gespannt mitgenommen wird. Für spezielle Anforderungen und je nach Oberflächenbeschaffenheit und/oder Dicke der Kunststofffolie können auch speziell profilierte Vorsprungsbereiche und/oder Vertiefungsbereiche vorteilhaft sein, beispielsweise mit kontinuierlichen Radien (Grobstruktur), auf welchem kleinere Mitnehmerelemente (Feinstruktur) angeordnet sind, z.B. raue Teilflächen, kleine Spikes oder ähnliches.

Um ein besonders effektives Spannen der Kunststofffolie zu erhalten, ist vorzugsweise vorgesehen, dass das Formwerkzeug eine Fixierungseinrichtung aufweist, über die die zu hinterspritzende Kunststofffolie auf dem ersten Formwerkzeugteil auf dem Spannflächenbereich des ersten Formwerkzeugteils aufliegend fixierbar ist. Diese Fixierung kann beispielsweise durch mechanisches Festklemmen der Folie erfolgen und/oder durch eine Fixierung mittels Vakuum-Ansaugung. Durch die Fixierung der Kunststofffolie auf dem ersten Formwerkzeugteil wird sichergestellt, dass beim Schließen des Werkzeugs durch den Eingriff des Vorsprungsbereichs des zweiten Werkzeugteils in den Vertiefungsbereich des ersten Werkzeugteils die Kunststofffolie in eine faltenfreie Anordnung gespannt wird.

Hierzu kann vorgesehen sein, dass die Fixierungseinrichtung den Vertiefungsbereich des ersten Formwerkzeugteils zumindest an zwei gegenüberliegenden Seiten umgibt. Es kann vorgesehen sein, dass die Fixierungseinrichtung beanstandet zu dem Spannflächenbereich des ersten und/oder zweiten Formwerkzeugteils und außerhalb der Kavität angeordnet ist.

Bevorzugt ist die Fixierungseinrichtung nur abschnittsweise oder vollständig umgebend um den Vertiefungsbereich des ersten Formwerkzeugteils angeordnet. Ferner ist es möglich, dass die Fixierungseinrichtung als Fixierungsbügel oder Fixierungsrahmen ausgebildet.

Es ist möglich, dass die Fixierungseinrichtung durch Teile einer Fördereinrichtung der Kunststofffolie gebildet ist und/oder als eine am ersten oder am zweiten Werkzeugteil abgestützte Presseinrichtung ausgebildet ist.

Bei bevorzugten Ausführungsformen ist der Spannflächenbereich des ersten Formwerkzeugteils vollständig umlaufend um den Dekorierflächenbereich angeordnet. Es sind aber auch Ausführungen möglich, bei denen der Spannflächenbereich des ersten Formwerkzeugteils nur abschnittsweise um den Dekorierflächenbereich angeordnet ist. Durch die vollständig umgebende Anordnung wird eine gleichmäßige Spannauflage der Kunststofffolie beim Hinterspritzen im Kunststoffwerkzeug gewährleistet.

Für die Ausgestaltung der Spannflächen des Spannflächenbereichs und die Ausgestaltung der Vorsprungs- und Vertiefungseinrichtung haben sich die folgenden bevorzugten Ausführungen als zweckdienlich erwiesen:

Bevorzugt ist der Spannflächenbereich des ersten Formwerkzeugteils als streifenförmige Fläche ausgebildet. Die streifenförmige Ausbildung begünstigt die Abdichtung der Kavität und stellt sicher, dass die Kunststofffolie im Dekorierflächenbereich faltenfrei ist.

Insbesondere kann vorgesehen sein, dass der Vertiefungsbereich des ersten Formwerkzeugteils nur abschnittsweise oder vollständig umgebend um den Dekorierflächenbereich und/oder den Spannflächenbereich des ersten Formwerkzeugteils angeordnet ist. Wesentlich bei der Anordnung des Vertiefungsbereichs und des Vorsprungsbereichs ist, dass die Kunststofffolie im Dekorierflächenbereich gleichmäßig gespannt werden kann.

Vorzugsweise ist der Vorsprungsbereich des zweiten Formwerkzeugteils deckungsgleich mit dem Vertiefungsbereich des ersten Formwerkzeugteils angeordnet.

Bei bevorzugten Ausführungen ist der Vertiefungsbereich des ersten Formwerkzeugteils als Vertiefungskanal und der Vorsprungsbereich in dem zweiten Formwerkzeugteil als komplementär vorspringende Leiste ausgebildet.

Vorzugsweise weist das zweite Formwerkzeugteil einen Spannflächenbereich auf. Der Spannflächenbereich ist bei geschlossenem Werkzeug deckungsgleich mit dem Spannflächenbereich des ersten Formwerkzeugteils angeordnet.

Eine wesentliche Zielsetzung bei dem Hinterspritzen der Kunststofffolie ist es, einen Formling zu erhalten, der eine Dekorierung mit der Kunststofffolie bis hin in den äußeren Rand der hierfür vorgesehenen Fläche des Formlings zu erhalten. Ferner wird angestrebt, dass der Formling eine scharfe Kante aufweist und die Dekorierung bis hin in die scharfe Kante reicht und genau im Kantenbereich endet. Hierbei sollen Ausführungen möglich sein, bei denen die Kante als winkelige Kante, vorzugsweise mit rechtem Winkel, gebildet ist und vollständig oder weitgehend ohne irgendeine Abrundung im Kantenbereich ausgebildet ist.

Besonders bevorzugte Ausführungsformen des Formwerkzeugs sehen vor, dass das zweite Formwerkzeugteil in der Kavität eine Formfläche bildet. Diese Formfläche bildet mit der Dekorierfläche eine winkelige Kante. Die Kante ist vollständig oder weitgehend ohne Abrundung ausgebildet. Somit ist die Herstellung von dekorierten Kunststoffformlingen mit scharfen Begrenzungskanten möglich. Vorzugsweise bildet das zweite Formwerkzeugteil in der Kavität eine Formfläche, die an die Dekorierfläche in einer gemeinsam fluchtenden Fläche anschließt.

Insbesondere kann der Spannflächenbereich des ersten Formwerkzeugteils mit einer Gegenfläche des zweiten Formwerkzeugteils bei zwischengeschalteter, das heißt zwischenliegender Kunststofffolie bei geschlossenem Werkzeug Dichtflächen bilden. Hierdurch kann vermieden werden, dass beim Vorgang des Hinterspritzens der Kunststofffolie mit der Kunststoffschmelze die Kunststoffschmelze aus der Kavität zwischen dem ersten und zweiten Formwerkzeugteil austritt.

Das Herstellungsverfahren gemäß Patentanspruch 12 erbringt die Herstellung eines Kunststoffformlings, der eine mit einer Kunststofffolie dekorierte Fläche aufweist und die vorangehend erörterten Ausgestaltungsmerkmale realisiert. Das Herstellungsverfahren sieht als Verfahrensschritte, die unmittelbar aufeinander folgen oder auch aufeinander folgen mit zwischenliegenden weiteren Verfahrensschritten, vor:
- Schritt a):: Anordnen der Kunststofffolie (4) auf dem ersten Formwerkzeugteil derart, dass die Dekorierfläche überdeckt wird.
- Schritt b):: Spannen der gemäß a) auf dem ersten Werkzeugteil angeordneten Kunststofffolie, währenddem das Formwerkzeug geschlossen wird, durch Zusammenführen vom ersten Formwerkzeugteil und zweiten Formwerkzeugteil.
- Schritt c):: Einlassen der Kunststoffschmelze in das geschlossene Formwerkzeug über die Einlassöffnung im zweiten Formwerkzeugteil.
- Schritt d):: Nach Abkühlen Öffnen des Formwerkzeugs und Entnehmen des Formlings.

Bei bevorzugten Ausführungen des Verfahrens erfolgt das Spannen gemäß Schritt b) simultan mit dem Schließen des Formwerkzeugs. Es kann vorgesehen sein, dass das vor dem Schritt b) eine Fixierung und/oder ein Vorspannen der gemäß Schritt a) auf dem ersten Werkzeugteil angeordneten Kunststofffolie erfolgt.

In der nachfolgenden Beschreibung ist die Erfindung anhand von Figuren weiter erläutert. Dabei zeigen die Figuren:
- Figur 1: zeigt eine Schnittansicht eines Formwerkzeuges eines ersten Ausführungsbeispiels.
- Figur 2: zeigt eine perspektivische Ansicht des oberen Formwerkzeugteils in Figur 1.
- Figur 3: zeigt eine perspektivische Ansicht des unteren Formwerkzeugteils in Figur 1.
- Figur 4: zeigt eine Schnittansicht eines Formwerkzeuges eines zweiten Ausführungsbeispiels.
- Figur 5: zeigt eine Schnittansicht eines Formwerkzeuges eines dritten Ausführungsbeispiels nicht gemäß der Erfindung.
- Figur 6: zeigt eine Schnittansicht eines Formwerkzeuges eines vierten Ausführungsbeispiels nicht gemäß der Erfindung.
- Figur 7: zeigt eine Schnittansicht eines Formwerkzeuges eines fünften Ausführungsbeispiels nicht gemäß der Erfindung.

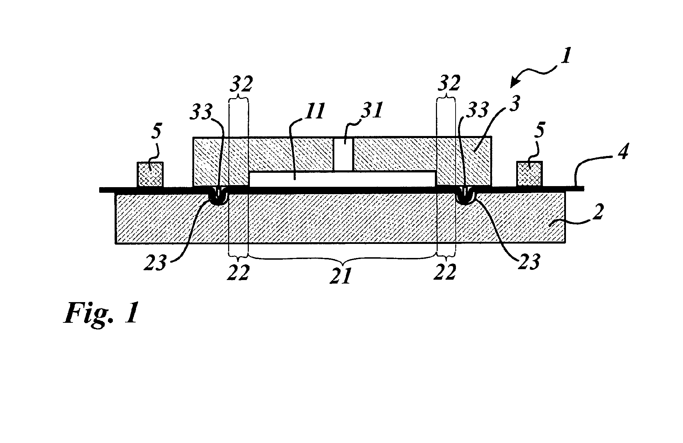

Das in Figur 1 dargestellte Formwerkzeug 1 ist aus zwei Formwerkzeugteilen 2, 3 zusammengesetzt. Figur 1 zeigt das Formwerkzeug in geschlossener Stellung vor dem Einspritzen der Kunststoffschmelze. Die zu hinterspritzende Kunststofffolie 4 ist in Figur 1 zwischen den Formwerkzeugteilen 2, 3 eingespannt angeordnet.

Die Kunststofffolie 4 ist in der in den Figuren gezeigten, bevorzugten Ausführungsformen mehrschichtig aufgebaut und weist eine Trägerfolie auf, die aus einer thermoplastischen Folie mit einer Schichtdicke zwischen 6 µm und 300 µm, weiter bevorzugt zwischen 10 µm und 50 µm. Die Formulierung der Trägerfolie wird bevorzugt so gewählt, dass die Glasübergangstemperatur der Trägerfolie zwischen 10 und 200 °C, weiter bevorzugt zwischen 20 und 150 °C liegt. Die Trägerfolie besteht bevorzugt aus PET, BOPP, PVC, PC, PET-PC, Polypropylen (PP), ABS, ABS-PC, Polystyrol, PMMA. Die Trägerfolie kann als einschichtiges Material oder als Materialverbund, z.B. als Laminat mehrerer Einzelfolien vorliegen und/oder mit einer oder mehreren Lackschichten beschichtet sein. Die Lackschichten können beispielsweise Haftvermittlerschichten sein oder Schutzschichten oder Schichten zur Verringerung der elektrostatischen Aufladung der Trägerfolie.

Weiterhin weist die Kunststofffolie 4 weitere Schichten auf, die auf der Trägerfolie angeordnet sind, insbesondere eine wärmeaktivierbare Ablöseschicht zum nachträglichen Abziehen der Trägerfolie vom restlichen, auf dem Formling verbleibenden Schichtpaket der Kunststofffolie 4, eine ein- oder mehrschichtige Schutzschicht, eine ein- oder mehrschichtige Dekorlage sowie eine wärmeaktivierbare Kleberschicht. Die Dekorlage kann dabei dekorative Schichten, wie z.B. opake, transluzente oder transparente Farblackschichten, Replizierlackschichten, Reflexionsschichten oder Metallschichten aufweisen und/oder funktionale Schichten wie z.B. elektrische Leiterbahnen aus Metall und/oder leitfähigen Polymeren, elektronische Bauelemente, optoelektronische Bauelemente oder auch fotosensitive Bauelemente. Die Ablöseschicht weist dabei insbesondere eine Schichtdicke von 0,001 bis 0,5 µm, die Dekorlage insbesondere eine Schichtdicke von 0,1 bis 50 µm und die Kleberschicht insbesondere eine Schichtdicke von 0,01 bis 10 µm auf.

Die Dekorlage kann als Motiv ein Endlosmuster aufweisen, wobei die genaue Lage zwischen Motiv und Formling keine Rolle spielt. Die Dekorlage kann als Motiv auch ein Einzelbild aufweisen, welches lagegenau auf dem Formling aufgebracht werden soll. Dazu ist es notwendig, dass die Kunststofffolie entsprechend lagegenau auf der Dekorierfläche positioniert wird. Dies geschieht mittels sogenannter Registermarken auf der Kunststofffolie, die von vorzugsweise optischen Sensoren an dem Formwerkzeug erfasst werden. Die optischen Sensoren steuern eine Fördereinrichtung der Kunststofffolie, die die Kunststofffolie in das Formwerkzeug, vorzugsweise als Endlosbahn von einer Rolle oder auch als Einzelblatt, transportiert.

Als Kunststoffschmelze werden bevorzugt thermoplastische Kunststoffe, wie ABS, ABS-PC, Polypropylen (PP), Polycarbonat (PC), Polystyrol, ABS-PC, PMMA, PET, PET-PC oder auch Kombinationen dieser Materialien eingesetzt.

Das Formwerkzeug 2 - das in Figur 1 untere Formwerkzeug - weist eine Dekorierfläche 21 auf. Das Formwerkzeug 3 - das in Figur 1 obere Formwerkzeugteil - weist einen Einlasskanal 31 für die Kunststoffschmelze auf. Zwischen den einander zugewandten Flächen der beiden Werkzeugteile 2, 3 ist ein Hohlraum 11 ausgebildet. Dieser Hohlraum 11 bildet die Kavität des Formwerkzeugs, d.h. der Raum, in dem die über den Einlasskanal 31 eingespritzte Kunststoffschmelze aufgenommen wird, um den Kunststoffformling darin auszubilden unter Hinterspritzen der Kunststofffolie 4.

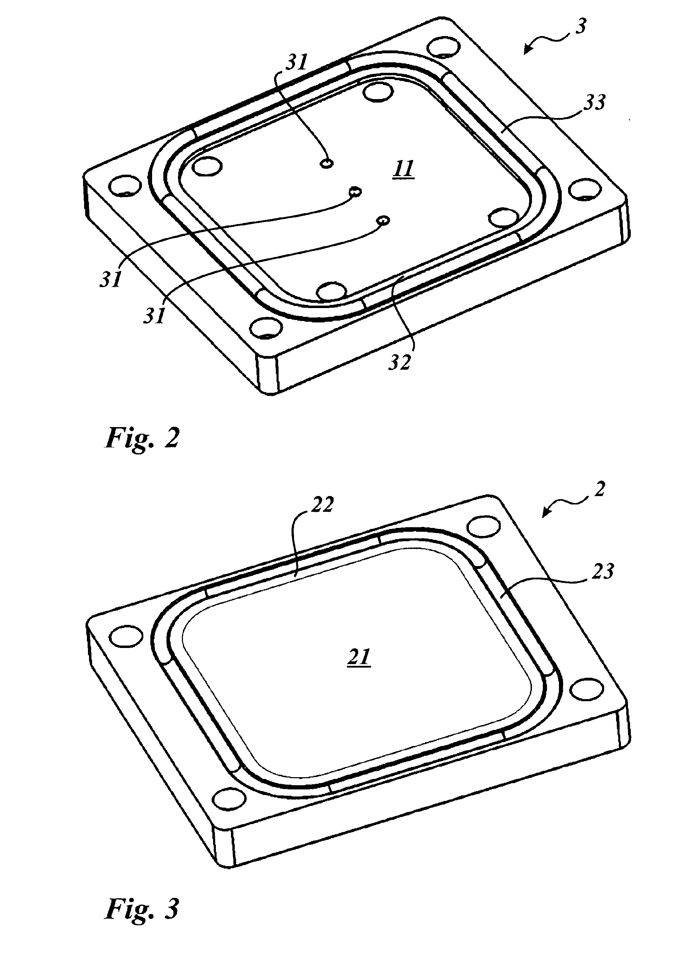

Wesentlich ist, dass die zu hinterspritzende Kunststofffolie 4, wie Figur 1 zeigt, in dem geschlossenen Formwerkzeug gespannt angeordnet ist. Zum Spannen der Kunststofffolie 4 ist an dem unteren Werkzeugteil 2 eine ebene Spannfläche 22 und ein Vertiefungskanal 23 umlaufend um die Dekorierfläche 21 ausgebildet, wie dies in der perspektivischen Darstellung in Figur 3 zu erkennen ist. Die Spannfläche 22 ist als streifenförmige Fläche ausgebildet, die unmittelbar an die Dekorfläche 21 angrenzend ausgebildet ist und diese als geschlossene Ringfläche umgibt. Der innere Rand dieser ringförmig ausgebildeten Spannfläche 22 fällt mit dem äußeren Rand der Dekorierfläche 21 unmittelbar zusammen. An dem äußeren Rand der Spannfläche 22 ist der Vertiefungskanal 23 ausgebildet. Er bildet einen umlaufenden Vertiefungskanal 23, der am gesamten äußeren Rand der Spannfläche 22 umläuft. Der umlaufende Vertiefungskanal 23 bildet damit den äußeren Rand der Spannfläche 22. Es sei auch diesbezüglich verwiesen auf die perspektivische Darstellung in Figur 3, die den Verlauf des Vertiefungskanals 23 gut erkennbar darstellt.

An dem oberen Werkzeugteil 3 ist in der dem unteren Werkzeugteil 2 zugewandten Fläche ebenfalls eine in Art eines geschlossenen Rings umlaufende ebene Spannfläche 32 ausgebildet. Sie ist als Spannfläche 32 deckungsgleich mit der Spannfläche 22 des unteren Werkzeugteils 2, d.h. sie ist in ihren Abmessungen und in ihrer Anordnung so ausgebildet, dass bei geschlossenem Werkzeug die Spannfläche 32 fluchtend deckungsgleich mit der Spannfläche 22 angeordnet ist, wobei die zu hinterspritzende Kunststofffolie 4 zwischengeschaltet, das heißt zwischen Spannfläche 22 und Spannfläche 32 liegend angeordnet ist. Die Spannflächen 22 und 32 liegen dabei flächig auf der Unterseite bzw. der Oberseite der Kunststofffolie 4 auf. Dies ist am besten in der Schnittdarstellung in Figur 1 zu erkennen. Wesentlich ist, dass in dem oberen Werkzeugteil 3 am äußeren Rand der Spannfläche 32 eine Eingriffleiste 33 angeordnet ist, die komplementär in den im unteren Werkzeugteil 2 ausgebildeten Vertiefungskanal 23 eingreift. Die auch in Fig. 2 in perspektivischer Darstellung erkennbare Eingriffleiste 33 ist als umlaufende vorspringende Leiste ausgebildet, die die ringförmige Spannfläche 32 in gleicher Weise in Art eines geschlossenen Rings umgibt, wie der Vertiefungskanal 23 die ringförmige Spannfläche 22 und die darin angeordnete Dekorierfläche 22 im unteren Werkzeugteil 2 umgibt. Aufgrund der deckungsgleichen Anordnung ergibt sich in der geschlossenen Stellung des Werkzeugs der in Figur 1 gezeigte Eingriff der Eingriffleiste 33 in den Vertiefungskanal 23, wobei die zwischenliegende Kunststofffolie 4 durch die Eingriffleiste 33 in den Vertiefungskanal 23 hineingeführt ist, das heißt durch Einwirkung der Eingriffleiste 33 hineingezogen ist.

Bei einer lagegenauen Positionierung der Kunststofffolie auf der Dekorierfläche ist es vorteilhaft, wenn die Kunststofffolie 4 von Vertiefungskanal 23 und von Eingriffleiste 33 innerhalb vorbestimmter Flächenbereiche, insbesondere vorbestimmter Spannzonen beaufschlagt wird. Die Kunststofffolie 4 kann in diesen Spannzonen andere Eigenschaften aufweisen als auf der restlichen Fläche. Beispielsweise können in den Spannzonen Durchbrechungen in der Kunststofffolie 4 vorgesehen sein, in die Vertiefungskanal 23 und Eingriffleiste 33 eingreifen oder die Kunststofffolie 4 weist in den Spannzonen einen anderen Schichtaufbau auf, wobei entweder einzelne Schichten entfernt sind, beispielsweise die Kleberschicht oder weitere Schichten zusätzlich vorgesehen sind, beispielsweise Haftschichten oder Antihaftschichten oder andere Funktionsschichten, die die mechanischen Eigenschaften der Kunststofffolie 4 für das Spannen verbessern.

Wie in Figur 1 zu erkennen ist, ist außerhalb des umlaufenden Vertiefungskanals 23 auf dem unteren Werkzeugteil 2 ein auf der Kunststofffolie 4 aufliegender Fixierrahmen 5 angeordnet. Der Fixierrahmen 5 ist in den perspektivischen Figuren 2 und 3 weggelassen. Er ist vorzugsweise als umlaufender Fixierrahmen 5 ausgebildet, der mit Abstand zum äußeren Rand des umlaufenden Vertiefungskanals 23 angeordnet ist. Er sorgt dafür, dass die Kunststofffolie 4 vor dem Schließen des Werkzeugs flächig auf der Spannfläche 22 des unteren Werkzeugteils 2 aufliegt und in dieser Position auf dem Werkzeugteil 2 fixiert wird. Wenn das Werkzeug 1 dann geschlossen wird und die in Figur 1 dargestellte geschlossene Stellung eingestellt wird, kommt die umlaufende Eingriffleiste 33 des oberen Werkzeugteils 3 in Eingriff mit dem umlaufenden Vertiefungskanal 23 im unteren Werkzeugteil 2. Die auf dem unteren Werkzeugteil 2 auf der Spannfläche 22 flächig aufliegende und über den Fixierrahmen fixierte Kunststofffolie 4 wird im Bereich zwischen Eingriffleiste 33 und Vertiefungskanal 23 hineingezogen, sodass die Kunststofffolie 4 über die umlaufende Spannfläche 22 gespannt wird und schließlich in der geschlossenen Stellung des Werkzeugs zwischen der unteren Spannfläche 22 und der oberen Spannfläche 32 faltenfrei gespannt, flächig eingeklemmt angeordnet ist. Die zwischen den Spannflächen 22, 32 angeordnete Kunststofffolie 4 bildet eine Abdichtung des Formwerkzeugs 1 in der geschlossenen Stellung.

Die Kavität 11 wird durch den zwischen den beiden Formwerkzeugteilen 2, 3 bei geschlossenem Formwerkzeug 1 gebildeten Hohlraum gebildet. Hierfür weist in Figur 1 das obere Formwerkzeugteil 3 eine Ausnehmung auf, die durch den inneren Rand der oberen Spannfläche 32 begrenzt ist. Diese Ausnehmung ist, wie aus den Figuren 2 und 3 erkennbar, im Wesentlichen quaderförmig ausgebildet. Sie weist in den seitlichen Kanten abgerundete Ecken auf. Die untere Begrenzung der Kavität 11 wird durch das untere Formwerkzeugteil 2 gebildet. In Figur 1 handelt es sich bei dieser unteren Begrenzung der Kavität 11 um die Dekorierfläche 21, die durch den inneren Rand der unteren Spannfläche 22 begrenzt ist und im Falle der Figur 1 in derselben Ebene wie die Spannfläche 22 fluchtend angeordnet ist.

Die auf dem unteren Formwerkzeugteil 2 auf der Dekorierfläche 21 aufliegende zwischen den Formwerkzeugteilen 2 und 3 zwischengeschaltete Kunststofffolie 4 wird mit der über den Einlasskanal 31 beim Spritzvorgang eingeleiteten Kunststoffschmelze hinterspritzt. Dies bedeutet, dass der in der Kavität 11 ausgeformte Kunststoffformling an der der Dekorierfläche 21 zugewandten Seite mit der Kunststofffolie dekoriert wird. Bei der Kunststofffolie kann es sich um eine Heißprägefolie oder auch um eine andere Kunststofffolie mit oder ohne Trägerfolie handeln.

Nach dem Abkühlvorgang wird das Werkzeug geöffnet und der mit der Kunststofffolie 4 dekorierte Kunststoffformling entnommen. Im Falle der Dekorierung mit einer Transferfolie, wie z.B. einer Heißprägefolie aus einer Trägerfolie und einer darauf lösbar angeordneten Transferlage oder einer anderen Folie mit Trägerfolie wird bei dem Herausnehmen des Kunststoffformlings die Trägerfolie von der an dem Kunststoffformling haftenden Transferlage abgezogen.

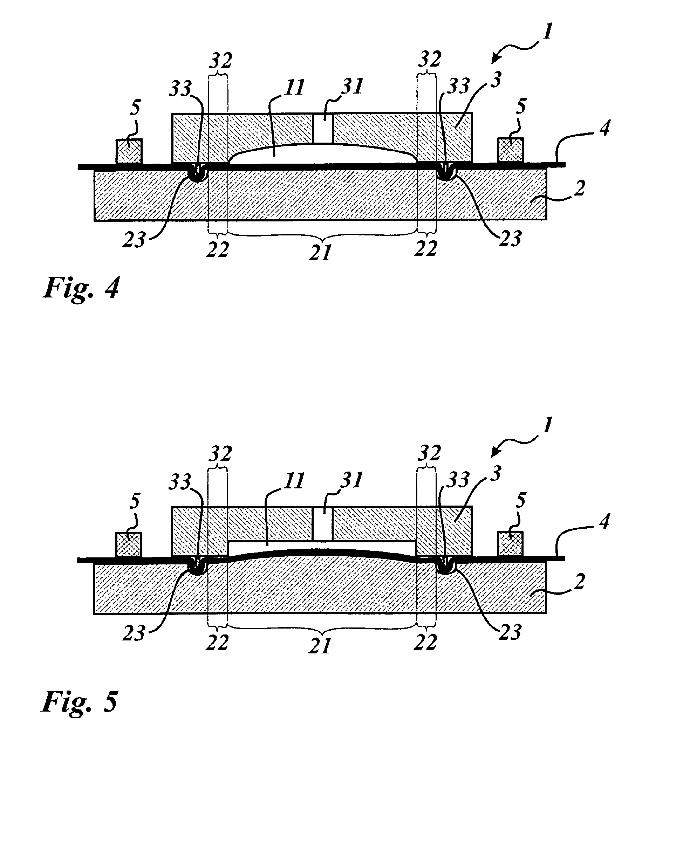

Figur 4 zeigt ein zweites Ausführungsbeispiel eines Formwerkzeugs 1, bei dem es sich um eine Abwandlung des ersten in den Figuren 1 bis 3 dargestellten Ausführungsbeispiels handelt. Der Unterschied dieser Ausführungsbeispiele liegt lediglich in der Ausgestaltung der Kavität 11. In Figur 4 weist die im oberen Werkzeugteil 3 ausgebildete Ausnehmung eine konkave obere Innenwand auf, die jedoch, wie Figur 4 zeigt, mit der Ebene der Spannfläche 32 ebenso wie bei dem Ausführungsbeispiel in Figur 1 eine rechtwinklige Kante bildet, da die konkave obere Innenwand also rechtwinklig in die ebene Unterseite ausläuft. Figur 5 zeigt ein drittes Ausführungsbeispiel eines Formwerkzeugs 1 nicht gemäß der Erfindung, das ebenfalls nur durch die Gestaltung der Kavität 11 gegenüber dem ersten Ausführungsbeispiel und auch gegenüber dem zweiten Ausführungsbeispiel abgewandelt ist. Der Unterschied gegenüber dem ersten Ausführungsbeispiel besteht in Figur 5 darin, dass die Dekorierfläche 21, die die untere Begrenzung der Kavität bildet, konvex ausgebildet ist. Diese konvexe Dekorfläche schließt mit ihrem äußeren Rand unmittelbar an den inneren Rand der ebenen Spannfläche 22 an. Die bei geschlossenem Werkzeug in Figur 5 gespannt eingesetzte Kunststofffolie 4 liegt auf der konvexen Dekorfläche auf und wird damit zusätzlich gespannt.

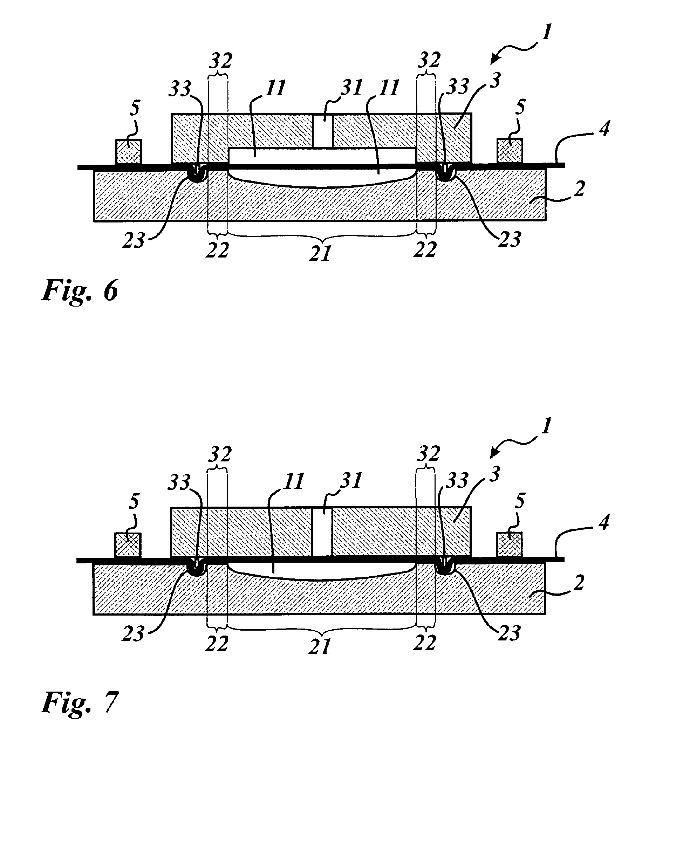

Figur 6 zeigt ein viertes Ausführungsbeispiels nicht gemäß der Erfindung, das ebenfalls gegenüber den vorangehenden Ausführungsbeispielen lediglich in der Ausgestaltung der Kavität 11 abgewandelt ist. In diesem Falle besteht der Unterschied gegenüber dem ersten Ausführungsbeispiel in Figur 1 darin, dass die Dekorfläche 21 in dem unteren Formwerkzeug 2 konkav ausgebildet ist, und zwar derart, dass die konkave Dekorfläche 21 im dargestellten Fall mit der Ebene der Spannfläche 22 eine rechtwinklige Kante bildet. In diesem Falle ist die bei geschlossenem Formwerkzeug gespannt eingesetzte Kunststofffolie 4, wie Figur 6 zeigt, nicht auf der Dekorierfläche 21 aufliegend, sondern lediglich auf der Spannfläche 22 mit ihrer Unterseite aufliegend und mit Abstand über der Dekorierfläche 21 gespannt. Auf der Oberseite der auf der Spannfläche 22 aufliegenden Kunststofffolie 4 ist in gleicher Weise wie bei den Ausführungsbeispielen in den Figuren 1 bis 5 die obere Spannfläche 32 des oberen Formwerkzeugs 3 flächig aufliegend unter Ausbildung eines Dichtungsbereichs, der die Kavität zwischen den Formwerkzeugteilen 2, 3 abdichtet. Wenn beim Spritzvorgang die Kunststoffschmelze in Figur 6 über den Einlasskanal 31 eingeleitet wird, wird die Kunststofffolie 4 von der Kunststoffschmelze einerseits durch die hohe Temperatur der Kunststoffschmelze erweicht und andererseits zur Dekorierfläche 21 hin bewegt, bis die Kunststofffolie 4 zur flächigen Anlage auf der Dekorierfläche 21 kommt und dabei weiter gespannt.

Figur 7 zeigt ein fünftes abgewandeltes Ausführungsbeispiels nicht gemäß der Erfindung. Es handelt sich hier um eine Abwandlung des in Figur 6 dargestellten Ausführungsbeispiels. Der Unterschied gegenüber Figur 6 besteht darin, dass im oberen Formwerkzeugteil 3 keine Ausnehmung ausgebildet ist, sondern die obere Begrenzungswand der Kavität durch die ebene Unterseite des oberen Formwerkzeugs 3 gebildet wird, wobei diese ebene Unterseite in der Ebene der oberen Spannfläche 32 fluchtend angeordnet ist. Wenn beim Spritzvorgang die Kunststoffschmelze über den Einlasskanal 31 in die Form in Figur 7 eingelassen wird, drängt die Kunststoffschmelze die durch die hohe Temperatur der Kunststoffschmelze erweichte Kunststofffolie 4 in entsprechender Weise wie bei dem Ausführungsbeispiel in Figur 6 auf die Dekorierfläche 21 des unteren Werkzeugteils 2 hin, bis eine flächige Auflage der Kunststofffolie auf der konkaven Dekorierfläche erhalten ist.

Im Folgenden wird die Erfindung zusammenfassend erläutert:

Erfindungsgemäße Ausführungen ermöglichen die Bereitstellung, vorzugsweise flacher, Kunststoffteile, d.h. Kunststoffformlinge, die IM-dekoriert sind, wobei die Dekorierfläche 21 einen scharfen Rand oder eine scharfe Kante aufweisen kann, die bis zum Rand beziehungsweise Kante hin, vorzugsweise abstandslos, dekoriert ist. Es ist möglich, IM-dekorierte Kunststoffteile bereitzustellen, die bevorzugt keine Rundung oder keinen Radius an ihren den Dekorierflächenbereich 21 begrenzten Kanten aufweisen. Ferner ist es möglich, dass diese Kunststoffteile keine, vorzugsweise sichtbare, Naht oder "parting line" aufweisen. Insbesondere können faltenfreie dekorierte Kunststoffteile hergestellt werden.

Bisher wurde die Faltenfreiheit erreicht, indem der Rand oder die Kante des Dekorierflächenbereichs einen kleinen oder ganz kleinen Kantenradius aufwies, welches mit der vorliegenden Erfindung entfällt. Dieser Kantenradius bewirkte, dass die Kunststoffschmelze oder Spritzgussmasse selbst beim Einströmen in das Formwerkzeug die Kunststofffolie glatt zog und mögliche Falten herausdrückte. Die Kunststoffschmelze oder Spritzgussmasse wirkte praktisch wie ein Rakel oder ein Keil und der Kantenradius bewirkte dabei eine Verstreckung der Kunststofffolie innerhalb des Formwerkzeuges. Die Verstreckung ist nötig, weil die Kunststofffolie beim Hinterspritzen oder Einfließen der heißen Kunststoffschmelze oder Spritzgussmasse erwärmt wird, d.h. weich wird und sich dadurch ausdehnt, so dass Falten entstehen können. Die Kunststofffolie wird bei der Ausformung des Kunststoffteils in den Kantenradius hineingezogen und/oder dehnt sich in den Kantenradius hinein. Bei erfindungsgemäßen Ausführungen ist es jedoch nicht mehr notwendig, einen Kantenradius vorzusehen, der eine "trichterartige Fokussierung" der Kunststofffolie 4 bewirkt. Daher ermöglicht die vorliegende Erfindung die Kantenformen der gespritzten Kunststoffteile vielfältiger zu gestalten. Somit können erfindungsgemäße Ausführungen Kunststoffteile bereitstellen, die präziser dekoriert werden können, als es bisher möglich war.

Erfindungsgemäße Ausführungen sehen insbesondere vorteilhaft vor, die Kunststofffolie 4 vor und während des Spritzgießens dauerhaft so zu straffen, dass die Kunststofffolie 4 im Dekorierflächenbereich 21 faltenfrei ist. Vorzugsweise ist hierbei ein Kunststoffaufnahmeraum, der zwischen der Oberseite des ersten Formwerkzeugteils 2 und der Unterseite des zweiten Formwerkzeugteils 3 im Dekorierflächenbereich 21 ausgebildet ist, im Bereich der durch den Spannflächenbereich 22 aufgespannten Ebene, also im Dekorierflächenbereich, nur leicht konvex oder konkav gewölbt oder eben.

Erfindungsgemäße Ausführungen sehen vorteilhaft vor, dass die Kunststofffolie 4 mittels der Eingriffsanordnung 33 und dem Vertiefungsbereich 23 unter Spannung fixiert oder eingeklemmt gehalten wird. Durch das Spannen der Kunststofffolie 4 mittels der Eingriffsanordnung 33 und dem Vertiefungsbereich 23 kann die Kunststofffolie 4 stark verformt werden. Der Spannflächenbereich 22 verhindert eine Faltenbildung der Kunststofffolie 4 im Dekorflächenbereich 21.

Bei bevorzugter erfindungsgemäßer Ausführung können die Eingriffsanordnung 33 und der Vertiefungsbereich 23 als Zugelemente wirken, weil die Eingriffsanordnung und der Vertiefungsbereich beim Schließen des Formwerkzeuges die Kunststofffolie "mitnehmen". Somit kann die Spannung der Kunststofffolie 4 beim Schließen des Formwerkzeuges 1 erhöht werden. Ferner kann die Kunststofffolie 4 beim Schließen des Formwerkzeuges glatt gezogen werden.

Insbesondere ist es möglich, die Eingriffsanordnung 33 und der Vertiefungsbereich 23 derart anzuordnen, dass die Spannung der Kunststofffolie 4 unabhängig von der Konturform des Dekorierflächenbereichs 21 und/oder des Kunststoffaufnahmeraums 11 ist. Die Spannung der Kunststofffolie 4 erfolgt hierbei bevorzugt aus dem Zentrum des Dekorierflächenbereichs 21 und/oder des Kunststoffaufnahmeraums 11. Somit kann die Kunststofffolie 4 allseitig gleichmäßig über den gesamten Dekorierflächenbereich 21 faltenfrei gespannt sein. Vorzugsweise ist der Spannflächenbereich 22 an die Kontur des Dekorierflächenbereichs 21 angepasst.

### Bezugszeichenliste:

- 1: Formwerkzeug
- 11: Kunststoffaufnahmeraum

- 2: unteres Formwerkzeugteil
- 21: Dekorierflächenbereich
- 22: Spannflächenbereich
- 23: Vertiefungsbereich

- 3: oberes Formwerkzeugteil
- 31: Einlassöffnung
- 32: Spannflächenbereich
- 33: Eingriffsanordnung

- 4: Kunststofffolie

- 5: Fixierungseinrichtung

## Patentansprüche

1. Formwerkzeug (1) zum Hinterspritzen einer Kunststofffolie (4) mit einer Kunststoffschmelze
mit einem ersten Formwerkzeugteil (2), einem zweiten Formwerkzeugteil (3) und einer durch diese gebildeten Kavität (11),
wobei das erste Formwerkzeugteil (2) einen Dekorierflächenbereich (21), einen im Bereich des äußeren Randes des Dekorierflächenbereichs (21) angeordneten Spannflächenbereich (22) und einen innerhalb des Spannflächenbereichs (22) und/oder in dem äußeren Rand des Spannflächenbereichs (22) und/oder außen mit Abstand vom äußeren Rand des Spannflächenbereichs (22) angeordneten Vertiefungsbereich (23) aufweist,
wobei das Formwerkzeug eine Fixierungseinrichtung (5) aufweist, über die die zu hinterspritzende Kunststofffolie (4) auf dem ersten Formwerkzeugteil (2) auf dem Spannflächenbereich (22) des ersten Formwerkzeugteils (2) aufliegend vor dem Schließen des Formwerkzeugs fixierbar ist,
wobei das zweite Formwerkzeugteil (3) eine Einlassöffnung (31) für die Kunststoffschmelze und einen Vorsprungsbereich (33) aufweist, wobei der Vorsprungsbereich (33) des zweiten Formwerkzeugteils (3) so angeordnet ist,
dass der Vertiefungsbereich (23) des ersten Formwerkzeugteils (2) und der Vorsprungbereich (33) des zweiten Formwerkzeugteils (3) beim Schließen des Werkzeugs eine ineinandergreifende Eingriffseinrichtung bilden, mit der die zwischengeschaltete Kunststofffolie in Art eines Ziehvorgangs gespannt wird und
dass bei geschlossenem Werkzeug der Vorsprungbereich (33) des zweiten Formwerkzeugteils (3) in den Vertiefungsbereich (23) des ersten Formwerkzeugteils (2) eingreift, um die zwischen dem ersten Formwerkzeugteil (2) und dem zweiten Formwerkzeugteil (3) mindestens auf dem Spannflächenbereich (22) des ersten Formwerkzeugteils aufliegend angeordnete Kunststofffolie (4) in den Vertiefungsbereich (23) des ersten Formwerkzeugteils (2) unter Spannen der Kunststofffolie (4) zu halten,
**dadurch gekennzeichnet, dass**
der Dekorierflächenbereich (21) in der selben Ebene wie der Spannflächenbereich (22) des ersten Formwerkzeugteils (2) fluchtend angeordnet ist.

2. Formwerkzeug nach Anspruch 1,
**dadurch gekennzeichnet,**
**dass** der Spannflächenbereich (22) des ersten Formwerkzeugteils (2) nur abschnittsweise oder vollständig umgebend um den Dekorierflächenbereich (21) angeordnet ist.

3. Formwerkzeug nach einem der vorangehenden Ansprüche,
**dadurch gekennzeichnet,**
**dass** der Vertiefungsbereich (23) des ersten Formwerkzeugteils (2) nur abschnittsweise oder vollständig umgebend um den Dekorierflächenbereich (21) und/oder den Spannflächenbereich (22) des ersten Formwerkzeugteils (2) angeordnet ist.

4. Formwerkzeug nach einem der vorangehenden Ansprüche,
**dadurch gekennzeichnet,**
**dass** der Vorsprungsbereich (33) des zweiten Formwerkzeugteils (3) deckungsgleich mit dem Vertiefungsbereich (23) des ersten Formwerkzeugteils (2) angeordnet ist.

5. Formwerkzeug nach einem der vorangehenden Ansprüche,
**dadurch gekennzeichnet,**
**dass** der Vertiefungsbereich (23) des ersten Formwerkzeugteils (2) als Vertiefungskanal (23) und der Vorsprungsbereich (33) in dem zweiten Formwerkzeugteil (3) als komplementär vorspringende Leiste (33) ausgebildet ist.

6. Formwerkzeug nach einem der vorangehenden Ansprüche,
**dadurch gekennzeichnet,**
**dass** das zweite Formwerkzeugteil (3) einen Spannflächenbereich (32) aufweist, der bei geschlossenem Werkzeug deckungsgleich mit dem Spannflächenbereich (22) des ersten Formwerkzeugteils (2) angeordnet ist.

7. Formwerkzeug nach einem der vorangehenden Ansprüche,
**dadurch gekennzeichnet,**
**dass** die Fixierungseinrichtung (5) den Vertiefungsbereich (23) des ersten Formwerkzeugteils (2) zumindest an zwei gegenüberliegenden Seiten umgibt, und/oder
**dass** die Fixierungseinrichtung (5) nur abschnittsweise oder vollständig umgebend um den Vertiefungsbereich (23) des ersten Formwerkzeugteils (2) angeordnet ist.

8. Formwerkzeug nach einem der vorangehenden Ansprüche,
**dadurch gekennzeichnet,**
**dass** die Fixierungseinrichtung (5) durch eine Fördereinrichtung der Kunststofffolie gebildet ist und/oder als eine am ersten oder am zweiten Werkzeugteil abgestützte Presseinrichtung ausgebildet ist.

9. Formwerkzeug nach einem der vorangehenden Ansprüche,
**dadurch gekennzeichnet,**
**dass** das erste Formwerkzeugteil (2) in der Kavität (11) ausschließlich die Dekorierfläche (21) bildet.

10. Formwerkzeug nach einem der vorangehenden Ansprüche,
**dadurch gekennzeichnet,**
**dass** das zweite Formwerkzeugteil (3) in der Kavität (11) eine Formfläche bildet, die mit der Dekorierfläche (21) eine winkelige Kante, die vollständig oder weitgehend ohne Abrundung ausgebildet ist, bildet.

11. Formwerkzeug nach einem der vorangehenden Ansprüche,
**dadurch gekennzeichnet,**
**dass** der Spannflächenbereich (22) des ersten Formwerkzeugteils (2) mit einer Gegenfläche des zweiten Formwerkzeugteils (3) bei zwischengeschalteter Kunststofffolie (4) bei geschlossenem Werkzeug Dichtflächen bilden.

12. Verfahren zur Herstellung eines Kunststoffformlings, der eine mit einer Kunststofffolie dekorierte Fläche aufweist, unter Verwendung eines Formwerkzeugs (1) mit einem ersten Formwerkzeugteil (2) mit Dekorierfläche (21) und einem zweiten Formwerkzeugteil (3) mit Einlassöffnung (31) für die Kunststoffschmelze, wobei das Formwerkzeug (1) nach einem der vorangehenden Ansprüche ausgebildet ist;
das Verfahren umfassend die Schritte:
Schritt a) Anordnen der Kunststofffolie (4) auf dem ersten Formwerkzeugteil derart, dass die Dekorierfläche überdeckt wird und
Fixieren der auf dem ersten Werkzeugteil angeordneten Kunststofffol ie,
Schritt b) Spannen der gemäß a) auf dem ersten Werkzeugteil angeordneten Kunststofffolie währenddem das Formwerkzeug geschlossen wird durch Zusammenführen vom ersten Formwerkzeugteil und zweiten Formwerkzeugteil, indem ein Vorsprungbereich (33) des zweiten Formwerkzeugteils (3) in einen Vertiefungsbereich (23) des ersten Formwerkzeugteils (2) eingreift und dabei die zwischengeschaltete Kunststofffolie durch Mitnahme spannt.
Schritt c) Einlassen der Kunststoffschmelze in das geschlossene Formwerkzeug über die Einlassöffnung (31) im zweiten Formwerkzeugteil, und
Schritt d) Nach Abkühlen Öffnen des Formwerkzeugs und Entnehmen des Formlings.

13. Verfahren nach Anspruch 12,
**dadurch gekennzeichnet,**
**dass** das Spannen gemäß Schritt b) simultan mit dem Schließen des Formwerkzeugs erfolgt.

14. Verfahren nach Anspruch 12 oder 13,
**dadurch gekennzeichnet,**
**dass** vor dem Schritt b) ein Vorspannen der gemäß Schritt a) auf dem ersten Werkzeugteil angeordneten Kunststofffolie erfolgt.

## Claims

1. Moulding tool (1) for the back injection of a plastic film (4) having a plastic melt
having a first moulding tool part (2), a second moulding tool part (3) and a cavity (11) formed by these,
wherein the first moulding tool part (2) has a decorative surface region (21), a clamping surface region (22) arranged in the region of the outer edge of the decorative surface region (21) and a recess region (23) arranged inside the clamping surface region (22) and/or in the outer edge of the clamping surface region (22) and/or outside at a distance from the outer edge of the clamping surface region (22), wherein the moulding tool has a fixing device (5), via which the plastic film (4) to be back injected is able to be fixed on the first moulding tool part (2), laid out before closing the moulding tool on the clamping surface region (22) of the first moulding tool part (2),
wherein the second moulding tool part (3) has an inlet opening (31) for the plastic melt and a protrusion region (33),
wherein the protrusion region (33) of the second moulding tool (3) is arranged such
that the recess region (23) of the first moulding tool part (2) and the protrusion region (33) of the second moulding tool part (3) form an interlocking engagement means when closing the tool, with which the interposed plastic film is clamped in the way of a drawing process and
that in the case of a closed tool, the protrusion region (33) of the second moulding tool part (3) engages with the recess region (23) of the first moulding tool part (2), in order to keep the plastic film (4), that is arranged to be laid out between the first moulding tool part (2) and the second moulding tool part (3) at least on the clamping surface region (22) of the first moulding tool part, in the recess region (23) of the first moulding tool part (2) by clamping the plastic film (4),
**characterised in that,**
the decorative surface region (21) is arranged to be aligned in the same plane as the clamping surface region (22) of the first moulding tool part (2).

2. Moulding tool according to claim 1,
**characterised in that,**
the clamping surface region (22) of the first moulding tool part (2) is arranged to surround the decorative layer region (21) only in sections or completely.

3. Moulding tool according to one of the preceding claims,
**characterised in that,**
the recess region (23) of the first moulding tool part (2) is arranged to surround the decorative surface region (21) and/or the clamping surface region (22) of the first moulding tool part (2) only in sections or completely.

4. Moulding tool according to one of the preceding claims,
**characterised in that,**
the protrusion region (33) of the second moulding tool part (3) is arranged congruently with the recess region (23) of the first moulding tool part (2).

5. Moulding tool according to one of the preceding claims,
**characterised in that,**
the recess region (23) of the first moulding tool part (2) is formed as a recess channel (23) and the protrusion region (33) in the second moulding tool part (3) is formed as a strip (33) which protrudes in a complementary manner.

6. Moulding tool according to one of the preceding claims,
**characterised in that,**
the second moulding tool part (3) has a clamping surface region (32) which is arranged congruently with the clamping surface region (22) of the first moulding tool part (2) in the case of a closed tool.

7. Moulding tool according to one of the preceding claims,
**characterised in that,**
the fixing device (5) encloses the recess region (23) of the first moulding tool part (2) at least on two opposing sides, and/or
that the fixing device (5) is arranged to enclose the recess region (23) of the first moulding tool part (2) only in sections or completely.

8. Moulding tool according to one of the preceding claims,
**characterised in that,**
the fixing device (5) is formed by a conveyor device of the plastic film and/or is formed as a pressing device supported on the first or on the second tool part.

9. Moulding tool according to one of the preceding claims,
**characterised in that,**
the first moulding tool part (2) exclusively forms the decorative layer (21) in the cavity (11).

10. Moulding tool according to one of the preceding claims,
**characterised in that,**
the second moulding tool part (3) forms a forming area in the cavity (11), which forms an angular edge with the decorative surface (21) which is completely or extensively formed without rounding off.

11. Moulding tool according to one of the preceding claims,
**characterised in that,**
in the case of a closed tool, the clamping surface region (22) of the first moulding tool part (2) forms sealing surfaces with a counter surface of the second moulding tool part (3) in the case of an interposed plastic film (4).

12. Method for the production of a plastic moulded product which has a surface decorated with a plastic film, using a moulding tool (1) having a first moulding tool part (2) having a decorative surface (21) and a second moulding tool part (3) having an inlet opening (31) for the plastic melt, wherein the moulding tool (1) is formed according to one of the preceding claims;
the method comprises the steps:
Step a) arranging the plastic film (4) on the first moulding tool part in such a way that the decorative surface is covered and fixing the plastic film which is arranged on the first tool part,
Step b) clamping of the plastic film arranged according to a) on the first tool part whilst the moulding tool is closed by bringing together the first moulding tool part and second moulding tool part in that a protrusion region (33) of the second moulding tool part (3) engages with a recess region (23) of the first moulding tool part (2) and therein tensions the interposed plastic film by pulling-in.
Step c) letting the plastic melt into the closed moulding tool via the inlet opening (31) in the second moulding tool part, and
Step d) after cooling, opening of the moulding tool and removal of the moulded product.

13. Method according to claim 12,
**characterised in that,**
the tensioningaccording to step b)occurs simultaneously with the closing of the moulding tool part.

14. Method according to claim 12 or 13,
**characterised in that,**
before step b), a pre-tensioning of the plastic film arranged on the first tool part according to step a) occurs.

## Revendications

1. Outil de formage (1) destiné au surmoulage par injection d'une feuille de plastique (4) avec une masse fondue de plastique, présentant une première partie d'outil de formage (2), une seconde partie d'outil de formage (3) et une cavité (11) formée par celle-ci, la première partie d'outil de formage (2) présentant une zone de surface décorative (21), une zone de surface de tension (22) agencée dans la zone du bord extérieur de la zone de surface décorative (21) et une zone de cavité (23) agencée à l'intérieur de la zone de surface de tension (22) et/ou dans le bord extérieur de la zone de surface de tension (22) et/ou à l'extérieur à distance du bord extérieur de la zone de surface de tension (22), l'outil de formage présentant un dispositif de fixation (5), par lequel la feuille de plastique (4) à surmouler par injection peut être fixée sur la première partie d'outil de formage (2) en reposant sur la zone de surface de tension (22) de la première partie d'outil de formage (2) avant la fermeture de l'outil de formage,
la seconde partie d'outil de formage (3) présentant une ouverture d'entrée (31) pour la masse fondue de plastique et une zone de saillie (33),
la zone de saillie (33) de la seconde partie d'outil de formage (3) étant agencée de sorte que
la zone de cavité (23) de la première partie d'outil de formage (2) et la zone de saillie (33) de la seconde partie d'outil de formage (3) forment, lors de la fermeture de l'outil, un dispositif d'engagement mutuel, avec lequel la feuille de plastique intercalée est tendue par un processus d'étirage et
lorsque l'outil est fermé, la zone de saillie (33) de la seconde partie d'outil de formage (3) s'engage dans la zone de cavité (23) de la première partie d'outil de formage (2) afin de maintenir la feuille de plastique (4) agencée en reposant entre la première partie d'outil de formage (2) et la seconde partie d'outil de formage (3) au moins sur la zone de surface de tension (22) de la première partie d'outil de formage dans la zone de cavité (23) de la première partie d'outil de formage (2) en tendant la feuille de plastique (4),
**caractérisé en ce que**
la zone de surface décorative (21) est agencée en alignement dans le même plan que la zone de surface de tension (22) de la première partie d'outil de formage (2).

2. Outil de formage selon la revendication 1, **caractérisé en ce que**
la zone de surface de tension (22) de la première partie d'outil de formage (2) est agencée seulement par section ou complètement autour de la zone de surface décorative (21).

3. Outil de formage selon l'une quelconque des revendications précédentes,
**caractérisé en ce que**
la zone de cavité (23) de la première partie d'outil de formage (2) est agencée seulement par section ou complètement autour de la zone de surface décorative (21) et/ou la zone de surface de tension (22) de la première partie d'outil de formage (2).

4. Outil de formage selon l'une quelconque des revendications précédentes,
**caractérisé en ce que**
la zone de saillie (33) de la seconde partie d'outil de formage (3) est agencée de manière à coïncider avec la zone de cavité (23) de la première partie d'outil de formage (2).

5. Outil de formage selon l'une quelconque des revendications précédentes,
**caractérisé en ce que**
la zone de cavité (23) de la première partie d'outil de formage (2) est réalisée comme un canal de cavité (23) et la zone de saillie (33) dans la seconde partie d'outil de formage (3) comme une barre (33) en saillie de manière complémentaire.

6. Outil de formage selon l'une quelconque des revendications précédentes,
**caractérisé en ce que**
la seconde partie d'outil de formage (3) présente une zone de surface de tension (32) qui est agencée lorsque l'outil est fermé de manière à coïncider avec la zone de surface de tension (22) de la première partie d'outil de formage (2).

7. Outil de formage selon l'une quelconque des revendications précédentes,
**caractérisé en ce que**
le dispositif de fixation (5) entoure la zone de cavité (23) de la première partie d'outil de formage (2) au moins sur deux côtés opposés et/ou
le dispositif de fixation (5) est agencé seulement par section ou complètement autour de la zone de cavité (23) de la première partie d'outil de formage (2).

8. Outil de formage selon l'une quelconque des revendications précédentes,
**caractérisé en ce que**
le dispositif de fixation (5) est formé par un dispositif de transport de la feuille de plastique et/ou est réalisé comme un dispositif de pressage en appui contre la première ou la seconde partie d'outil.

9. Outil de formage selon l'une quelconque des revendications précédentes,
**caractérisé en ce que**
la première partie d'outil de formage (2) forme dans la cavité (11) exclusivement la surface décorative (21).

10. Outil de formage selon l'une quelconque des revendications précédentes,
**caractérisé en ce que**
la seconde partie d'outil de formage (3) forme dans la cavité (11) une surface de formage qui forme avec la surface décorative (21) une arête angulaire qui est réalisée complètement ou essentiellement sans arrondi.

11. Outil de formage selon l'une quelconque des revendications précédentes,
**caractérisé en ce que**
la zone de surface de tension (22) de la première partie d'outil de formage (2) forme des surfaces étanches avec une surface antagoniste de la seconde partie d'outil de formage (3) en cas de feuille de plastique (4) intercalée lorsque l'outil est fermé.

12. Procédé de fabrication d'une ébauche de plastique qui présente une surface décorée avec une feuille de plastique, en utilisant un outil de formage (1) présentant une première partie d'outil de formage (2) avec une surface décorative (21) et une seconde partie d'outil de formage (3) avec une ouverture d'entrée (31) pour la masse fondue de plastique, l'outil de formage (1) étant réalisé selon l'une quelconque des revendications précédentes ;
le procédé comprenant les étapes suivantes :
étape a) agencement de la feuille de plastique (4) sur la première partie d'outil de formage de telle manière que la surface décorative soit recouverte et
fixation de la feuille de plastique agencée sur la première partie d'outil,
étape b) tension de la feuille de plastique agencée, selon a), sur la première partie d'outil pendant que l'outil de formage est fermé par réunion de la première partie d'outil de formage et de la seconde partie d'outil de formage, tandis qu'une zone de saillie (33) de la seconde partie d'outil de formage (3) s'engage dans une zone de cavité (23) de la première partie d'outil de formage (2) et tend la feuille de plastique intercalée par entraînement.
étape c) entrée de la masse fondue de plastique dans l'outil de formage fermé par l'ouverture d'entrée (31) dans la seconde partie d'outil de formage et
étape d) après refroidissement, ouverture de l'outil de formage et retrait de l'ébauche.

13. Procédé selon la revendication 12,
**caractérisé en ce que**
la tension selon l'étape b) est réalisée en même temps que la fermeture de l'outil de formage.

14. Procédé selon la revendication 12 ou 13,
**caractérisé en ce que**
avant l'étape b), une précontrainte de la feuille de plastique agencée selon l'étape a) sur la première partie d'outil est réalisée.
